# EUROPÄISCHE PATENTANMELDUNG

(11) **EP 2 824 124 A1**
(43) Veröffentlichungstag der Anmeldung: **14.01.2015**
(21) Anmeldenummer: 13176235.3
(22) Anmeldetag: 12.07.2013
(51) Int. Cl.: C08F 220/28, C04B 24/24, C04B 24/14

(54) **POLYMERES DISPERGIERMITTEL**

(71) Anmelder: BASF SE, 67056 Ludwigshafen (DE)
(72) Erfinder: Gädt, Torben, 83278 Traunstein (DE); Winklbauer, Martin, 84553 Halsbach (DE); Grassl, Harald, 84550 Feichten (DE); Schinabeck, Michael, 83352 Altenmarkt (DE); Hillesheim, Nina, 83308 Trostberg (DE); Hungerhuber, Antonia, 83308 Trostberg (DE)
(74) Vertreter: Gastner, Thomas

(57) **Zusammenfassung**

Die Erfindung betrifft ein Dispergiermittel, umfassend ein Polymer, erhältlich durch Copolymerisation von Monomeren, umfassend 5 bis 80 Mol-% eines Hydroxyalkylacrylatphosphats und/oder Hydroxyalkylacrylamidphosphats (Monomer 1), 0 bis 20 Mol-% eines Di-(hydroxyalkylacrylat)-phosphats und/oder Di-(hydroxyalkylacrylamid)-phosphats (Monomer 2) und 1 bis 80 Mol-% eines eine Alkengruppe umfassenden polyalkylenglycol-haltigen Makromonomeren (Monomer 3). Weiterhin wird ein Verfahren zur Herstellung der erfindungsgemäßen Polymere sowie deren Verwendung als Dispergiermittel in calciumsulfathaltigen Zusammensetzungen offenbart. Ein weiterer Aspekt der Erfindung ist ein Verfahren zur Herstellung von Gips-Formkörpern sowie Gips-Formkörper, insbesondere Gipskartonplatten und Fließestriche, umfassend das erfindungsgemäße Dispergiermittel.

## Beschreibung

Die Erfindung betrifft ein Dispergiermittel auf Basis eines Polymers, welches durch Copolymerisation von spezifischen Monomeren erhältlich ist.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt. Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n = 0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

Ziel der Zugabe von Dispergiermitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Dispergiermittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Dispergiermitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Neben den beschriebenen Polycarboxylatethern sind inzwischen auch eine Reihe von Derivaten mit modifiziertem Wirkungsprofil bekannt. So beschreibt beispielsweise WO2010076093 ein Copolymer, umfassend i) 3 bis 40 Mol-% eines Isoprenolpolyetherderivats der Struktureinheit α, ii) 3 bis 40 Mol-% eines Polyether-vinyloxy-Struktureinheit β und iii) 35 bis 93 Mol-% einer eine Säure umfassenden Struktureinheit γ, bei der es sich bei der Säure auch um einen Phosphorsäureester handeln kann, wobei die strukturelle Einheit β des Copolymers längere Seitenketten als die Struktureinheit α aufweist.

EP1975136 beschreibt Dispergiermittel für hydraulische Bindemittel, umfassend ein Polymer, welches durch Copolymerisation von mindestens vier Monomerbausteinen erhältlich ist, wobei jeder Monomerbaustein einen ungesättigten Rest umfasst. Hierbei handelt es sich um ein Monomer, umfassend eine Polyoxyalkylen-Gruppe, ein Monomer umfassend einen Phosphat-Monoester, ein Monomer umfassend einen Phosphat-Diester und ein Monomer umfassend einen Carbonsäurerest.

Im Stand der Technik sind eine Reihe weiterer Dispergiermittel auf Basis von Copolymeren bekannt, welche ein ungesättigtes Monomer, umfassend eine Polyalkylenglycol-Seitenkette sowie ein ungesättigtes Monomer mit einem Phosphat-Rest umfassen. Diesbezüglich seien insbesondere die EP1767504, EP1972643, EP1743877, WO2010109335 und US8058377 genannt.

Es ist weiterhin bekannt, dass Kammpolymere mit Polyethylenglykolseitenketten und Carboxylateinheiten entlang des Polymerrückgrats sehr dosiereffiziente Verflüssiger für Gipssuspensionen sind. Ein bedeutender Nachteil dieser Verflüssiger ist die nicht unerhebliche Verzögerung der Gipshydratation. Dies macht im Herstellungsverfahren von Gipskartonplatten erhebliche Probleme. So muss z.B. eine nicht unerhebliche Menge von Hydratationsbeschleuniger in Form einer Gips Suspension zudosiert werden, um eine ausreichend schnelle Hydration zu gewährleisten. Insbesondere die Dosierung führt durch Verstopfen der Leitungen der Beschleunigersuspension häufig zu Unterbrechungen der Produktion von Gipskartonplatten.

Aus der JP 2000-327386 ist bekannt, dass Copolymere-Dispergiermittel auf Basis von ungesättigten Monomeren mit einem Phosphat-Rest, beispielsweise 2-Hydroxyethylmethacrylatphosphat (HEMA-Phosphat), welche mit ungesättigten Monomeren, welche über eine Monoether- oder Monoesterbindung eine Polyalkylenglycol-Seitenkette tragen, eine gute Verflüssigung bei geringer Verzögerung in hydraulischen Bindemittel und insbesondere auch gipshaltigen Suspensionen ermöglichen.

Es besteht aber weiterhin das Problem, dass die offenbarten Copolymere relativ teuer sind und in verhältnismäßig großen Mengen eingesetzt werden müssen.

Daher bestand die Aufgabe Dispergiermittel, insbesondere für gipshaltige Suspensionen bereitzustellen, welche eine sehr geringe Verzögerung bei gleichzeitig hoher Dosiereffizienz erreichen.

Gelöst wurde diese Aufgabe durch ein Dispergiermittel, umfassend ein Polymer, erhältlich durch Copolymerisation von Monomeren, umfassend
5 bis 80 Mol-%, insbesondere 10 bis 60 Mol-%, besonders bevorzugt 15 bis 50 Mol-% mindestens eines Monomers 1, dargestellt durch die folgende Formel (1),
0 bis 20 Mol-%, insbesondere 1 bis 15 Mol-%, besonders bevorzugt 2 bis 10 Mol-% mindestens eines Monomers 2, dargestellt durch die folgende Formel (2) und
1 bis 80 Mol-%, insbesondere 5 bis 60 Mol-%, besonders bevorzugt 10 bis 50 Mol-% mindestens eines Monomers 3, dargestellt durch die folgende Formel (3): 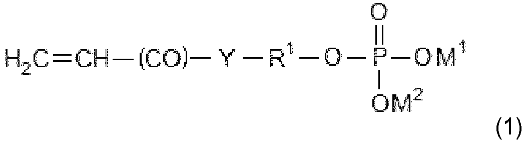 worin
   - R¹: für eine Alkylengruppe mit 2 bis 8 Kohlenstoffatomen steht,
   - Y: für O oder NR²,
   - R²: für einen Rest aus der Gruppe Wasserstoff, eine Alkylgruppe mit 1 bis 8 Kohlenstoffatomen und Formel (A), wobei R¹, M¹ und M² die für Formel (1) genannten Bedeutungen besitzen, 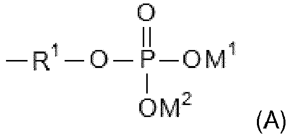
   M¹ und M² jeweils unabhängig voneinander für Wasserstoff, eine Ammonium-Verbindung und ein di- oder trivalentes Metall, bevorzugt Natrium oder Wasserstoff; 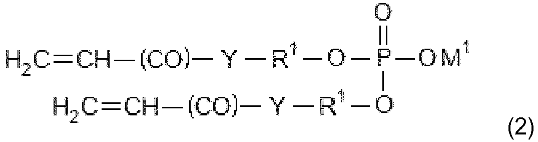 worin R¹, Y und M¹ die für Formel (1) genannten Bedeutungen besitzen,
   R³-O-(CₙH₂ₙO)ₘ-Z (3) worin
   - R³: für Wasserstoff, einen aliphatischen Kohlenwasserstoffrest mit 1 bis 16 C-Atomen, ein cycloaliphatischer Rest mit 5 bis 12 C-Atomen oder ein Arylrest mit 6 bis 14 C-Atomen, wobei der Arylrest weitere Substituenten aufweisen kann,
   - n: gleich oder verschieden und jeweils für eine ganze Zahl von 2 bis 4,
   - m: für eine ganze Zahl zwischen 20 und 160, insbesondere zwischen 50 und 140
   - Z: für mindestens einen Rest 4, 5, 6 und 7, dargestellt durch die folgenden Formeln (4), (5), (6) und (7): 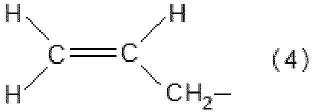 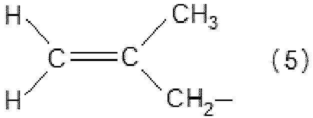 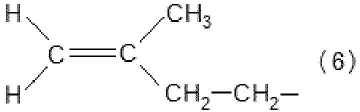 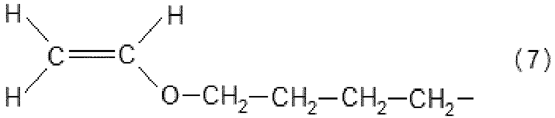
steht.

Überraschend wurde gefunden, dass das erfindungsgemäße Dispergiermittel in gipshaltigen Suspensionen eine sehr geringe Verzögerung bei exzellenter Dosiereffizienz ermöglicht.

Es ist weiterhin bevorzugt, dass es sich bei der Gruppe R¹ sowohl in Monomer 1 als auch in Monomer 2 um eine Ethylen-Gruppe handelt. Insbesondere kann es sich bei Monomer 1 um 2-Hydroxyethylacrylatphosphat, 3-Hydroxypropylacrylatphosphat, 2-Hydroxyethylacrylamidphosphat oder 3-Hydroxypropylacrylamidphosphat handeln. Bei Monomer 2 kann es sich bevorzugt um Bis[2-hydroxyethylacrylat]phosphat, Bis[3-hydroxypropylacrylat]phosphat, Bis[2-hydroxyethylacrylamid]phosphat oder Bis[3-hydroxypropylacrylamid]phosphat handeln.

Bei Monomer 3 kann es sich besonders bevorzugt um mindestens eine Verbindung aus der Reihe 3-Methylbut-3-en-1-ol-polyethylenglykol mit einer Molmasse von 1000 bis 3000 g/mol, 3-Methylbut-3-en-1-ol-polypropylenglykol mit einer Molmasse von 1000 bis 3000 g/mol, Methallyl-polyethylenglykol mit einer Molmasse von 1000 bis 3000 g/mol, Vinyloxybutylpolyethylenglykol mit einer Molmasse von 1000 bis 7000 g/mol, Vinyloxybutylpolypropylenglykol mit einer Molmasse von 1000 bis 7000 g/mol, Allylpolyethylenglykol mit einer Molmasse von 1000 bis 3000 g/mol, Allylpolypropylenglykol mit einer Molmasse von 1000 bis 3000 g/mol handeln.

Grundsätzlich können neben den erfindungswesentlichen Monomeren 1 bis 3 auch noch weitere Monomere in dem erfindungsgemäßen Polymer vorhanden sein. Geeignet sind hierbei insbesondere alle radikalisch polymerisierbaren Monomere. Beispielsweise kann das erfindungsgemäße Polymer mindestens ein weiteres Monomer aus den folgenden Monomeren umfassen:
- Arylalkene und Heteroarylalkene, ggf. substituiert, wie z.B.: Styrol, alpha-MethylStyrol, Vinylpyridin, 4-Vinylphenylsulfonsäure, 4-Vinylbenzoesäure, 4-Vinylphthalsäure und deren Salze
- Allyl- und Methallylverbindungen wie z.B.: Allylalkohol, Allylsulfonsäure, Methallylalkohol, Methallylsulfonsäure, 3-Allyloxy-1,2-Propandiol, 3-Allyloxy-1,2-propandiol, 3-Allyloxy-1,2-propandiol(polyalkoxyl)ether, 3-Methallyloxy-1,2-propandiol, 3-Methallyloxy-1,2-propandiol(polyalkoxyl)ether, Isoprenol, Isoprenolalkylether
- Vinylether wie z.B. 1-Butylvinylether, Isobutylvinylether, Aminopropyvinylether, Ethylenglykolmonovinylether, 4-Hydroxybutylmonovinylether, Vinyletheralkoxylate,
- Vinylester wie z.B. Vinylacetat, Carbamidsäurevinylester
- Vinylische Aldehyde und Ketone wie z.B. Acrolein, Methacrolein, Vinyl-1,3-dioxolan, Crotonaldehyd, 3-Oxo-1-buten
- Acrylsäure und Methacrylsäure, deren Salze und deren Ester wie z.B. 2-Hydroxyethylacrylat, 2-Hydroxethylmethacrylat, 2-Hydroxypropylacrylat, 2-Hydroxypropylmethacrylat, Methylmethacrylat, Ethylmethacrylat, Methylacrylat, (Methyl)-Polyoxyalkylacrylate, (Methyl)Polyoxyalkylmethacrylate, 2,3-Hydroxypropyl(meth)acrylat
- Acrylamide und Methacrylamide, ggf. substituiert, wie Acrylamid, Methacrylamid, N,N-Dimethylacrylamid, N-isopropyl-acrylamid, N-Methacryloyl-glycinamid, Acryloyloxyethyltrimethylammoniumchlorid
- Acrylnitril und Methacrylnitril
- Ungesättigte Polycarbonsäuren und deren Derivate wie z.B.: Maleinsäure, Maleinsäureanhydrid, Maleinsäuremono- und diester wie z.B.: Dimethylmaleat, Monomethylmaleat, Diethylmaleat, Ethylmaleat, Dibutylmaleat, Poly(oxyalkylenmonomethylether)monomaleat, Poly(oxyalkylenmonomethylether)dimaleat, (Phosphonooxyalkylen)monomaleat, (Phosphonooxyalkylen)dimaleat,
- Maleinsäuramide wie z.B. Maleinsäure-Sulfanilsäureamid, Poly(oxyalkylenmonomethylether)maleisäureamid, Poly(oxyalkylen)maleinsäureamid, (Phosphonooxyalkylen)maleinsäuremonoamid, (Phosphonooxyalkylen)maleinsäurediamid,
- Maleinsäuremonoanilid, Maleinsäureimide wie z.B. Maleinimid, N-Ethylmaleinimid, Itaconsäure und Itaconsäureanhydrid, Itaconsäuremono(di)ester wie. Z.B.: Dimethylitaconat, Monomethylitaconat, Diethylitaconat, Monoethylitaconat, Monopoly(oxyalkylenmonomethylether)itaconat, Di-poly(oxyalkylenmonomethylether)itaconat, Itaconsäureamid wie z.B.: mono-Methylpolyoxyalkylenitaconamid, 2,4-Hexandiensäure
- Vinylische Schwefelverbindungen
- Alkylvinylsulfone
- Vinylsulfone
- Alkensulfonsäuren wie z.B. 2-Acrylolamido-2-methylpropansulfonsäure, Vinylbenzolsulfonsäure, Vinylsulfonsäure, Acrylsäure(3-sulfopropyl)ester
- Methacrylsäureethylsulfat, [2-(Acryloyloxy)ethyl]trimethylammoniummethylsulfat
- N-Vinylamide wie z.B.: 1-Vinyl-2-pyrrolidon, 1-Vinyl-2-piperidin, 1-Vinyl-2-caprolactam, 5-Vinylcarbazol, 2-Methyl-5-Vinylpyridin, N-Vinylacetamid, N-Vinylformamid
- Alkene und deren Derivate: 2-Buten-1,4-diol (sowie dessen Polyoxyalkylate), 3,4-Dihydroxy-1-buten (sowie dessen Polyoxyalkylate), Dimethylvinylcarbinol (sowie dessen Polyoxyalkylate), Prenol (sowie dessen Polyoxyalkylate), 3-Methyl-3-Buten-2-ol (sowie dessen Polyoxyalkylate)

Im Falle aller Monomere mit anionischen Gruppen sind auch deren Salze aus der Gruppe der di- und trivalenten Metalle sowie Ammonium-Verbindungen geeignet.

Insbesondere umfasst das erfindungsgemäße Dispergiermittel zwischen 1 und 39 Mol-%, besonderes bevorzugt zwischen 2 und 25 Mol-% mindestens eines weiteren Monomers aus der Reihe Methallylsulfonat, 2-Acryloamido-2-methylpropansulfonsäure, Vinylbenzolsulfonsäure, Maleinsäure, Poly(oxyalkylenmonomethylether)monomaleat, Acrylsäure, Methacrylsäure, und Vinylacetat.

In einer besonders bevorzugten Ausführungsform besteht das erfindungsgemäße Polymer aus Monomer 1, ggf. Monomer 2 und Monomer 3.

Das erfindungsgemäße Polymer hat bevorzugt ein mittleres Molekulargewicht zwischen 15.000 und 60.000 g/mol, insbesondere bevorzugt 20.000 bis 45.000 g/mol und besonders bevorzugt 20.000 bis 30.000 g/mol, wobei das Molekulargewicht mit Gel-Permeations-Chromatographie gegen einen PEG-Standard gemessen wird.

Das erfindungsgemäße Dispergiermittel kann als wässrige Lösung des erfindungsgemäßen Polymers vorliegen. Bevorzugt umfasst das erfindungsgemäße Dispergiermittel (i) 1 bis 70 Gew.-% des erfindungsgemäßen Polymers umfassend Monomer 1, ggf. Monomer 2 und Monomer 3, und (ii) 30 bis 99 Gew.-% Wasser.

Ein Anteil des erfindungsgemäßen Polymers von 10 bis 50 Gew.-%, bezogen auf das erfindungsgemäße Dispergiermittel, hat sich als besonders bevorzugt erwiesen.

Das erfindungsgemäße Dispergiermittel kann aber auch in festem Aggregatszustand vorliegen. Unter festen Aggregatszustand versteht man im Sinne der Erfindung insbesondere Pulver, Schuppen, Pellets, Granulate oder Platten, welche sich in dieser Form problemlos transportieren und lagern lassen.

Ein weiterer Aspekt der vorliegenden Erfindung ist ein Verfahren umfassend die Copolymerisation mindestens eines Monomers 1 gemäß Anspruch 1, dargestellt durch die Formel (1), ggf. mindestens eines Monomers 2 gemäß Anspruch 1, dargestellt durch die Formel (2) und mindestens eines Monomers 3 gemäß Anspruch 1, dargestellt durch die Formel (3), wobei die Polymerisation in wässriger Lösung durchgeführt wird. Bevorzugt wird die Temperatur der Reaktionslösung zwischen 5 und 100°C und der pH zwischen 0,5 und 8 eingestellt.

In einer alternativen Ausführungsform wird das erfindungsgemäße Verfahren in Abwesenheit von Lösungsmittel durchgeführt.

Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte.

Die Polymerisationsreaktion kann sowohl bei Normaldruck als auch unter erhöhtem oder erniedrigtem Druck erfolgen. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie, elektrische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Natriumdithionit, Sulfinsäure, Eisen(11)sulfat) oder Redoxsystemen enthalten.

Insbesondere bevorzugt handelt es sich um eine Mischung aus mindestens einer Sulfinsäure mit mindestens einem Eisen(II)-Salz und/oder um eine Mischung aus Ascorbinsäure mit mindestens einem Eisen(II)-Salz.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

Weiterhin betrifft die Erfindung die Verwendung des erfindungsgemäßen Dispergiermittels für anorganische Bindemittelsysteme. Bezogen auf den Polymeranteil der erfindungsgemäßen Dispergiermittel werden diese bevorzugt in einer Menge von 0,01 bis 10 Gew.-%, bezogen auf das Gewicht des mineralischen Bindemittels, verwendet, um in den anorganischen Bindemittelsysteme die gewünschte Wirkung zu erzielen.

Insbesondere kann es sich um hydraulische Bindemittel und/oder latenthydraulische Bindemittel handeln. Ein weiterer Aspekt der vorliegenden Erfindung ist die Verwendung des erfindungsgemäßen Dispergiermittels in Calciumsulfat basierenden Bindemittelsystemen. Wie bereits dargelegt können die erfindungsgemäßen Dispergiermittel in diesen Systemen besonders vorteilhaft eingesetzt werden, da hierdurch eine sehr geringe Verzögerung beim Abbinden bei gleichzeitig hoher Dosiereffizienz erreicht werden kann.

Das auf Calciumsulfat basierende Bindemittel kann in verschiedenen Hydratstufen vorliegen. Als erfindungsgemäße Bindemittel sind α-Calciumsulfathalbhydrat, ß-Calciumsulfathalbhydrat und das kristallwasserfreie Anhydrit, bzw. Mischungen der genannten Bindemittel bevorzugt. Besonders bevorzugt ist β-Calciumsulfathalbhydrat und insbesondere ß-Calciumsulfathalbhydrat enthaltend Anhydrit, insbesondere Anhydrit III. Auch kann Anhydritstaub (feingemahlenes Anhydrit) zum Einsatz kommen, welches relativ reaktionsträge ist und nur teilweise abbindet.

Das mineralische Bindemittel enthaltende Gemisch enthält bevorzugt mindestens 30 Gew.-%, insbesondere bevorzugt mindestens 50 Gew.-%, am meisten bevorzugt mindestens 70 Gew.-% Calciumsulfat basierendes Bindemittel, insbesondere Calciumsulfat-β-Halbhydrat, bezogen auf das Gesamtgewicht des mineralischen Bindemittels. Das mineralische Bindemittel kann weitere mineralische Bindemittel, beispielsweise hydraulisch abbindende Substanzen, enthalten, wie beispielsweise Zement, insbesondere Portlandzemente oder Tonerdeschmelzzemente und respektive deren Mischungen mit Flugaschen, Silikastaub, Schlacke, Hüttensande und Kalkstein oder gebrannter Kalk. Weiterhin kann das Gemisch weitere Zusätze, wie beispielsweise Fasern, sowie als Additive übliche Bestandteile wie beispielsweise andere Dispergiermittel, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Stärke, Zucker, Silikone, Schwundreduzierer, Entschäumer oder Schaumbildner enthalten.

In einem weiteren Aspekt betrifft die vorliegende Erfindung die Verwendung eines erfindungsgemäßen Dispergiermittels zur Herstellung von Gips-Formkörpern. Unter dem Begriff "Formkörper" wird jeder ausgehärtete Gegenstand verstanden, der eine dreidimensionale Ausdehnung aufweist. Das Aushärten des Formkörpers erfolgt durch Trocknen im Ofen oder an der Luft. Der erfindungsgemäße Formkörper kann ein beweglicher Gegenstand sein, beispielsweise eine Gipsplatte oder eine Skulptur. Der erfindungsgemäße Formkörper kann jedoch auch eine Füllung oder Beschichtung sein, beispielsweise ein Gipsputz, ein Bodenbelag oder Estrich, oder ein beliebiges Produkt, das bei der Verteilung und Aushärtung von Spachtelmasse entsteht, beispielsweise die Füllung eines Hohlraums oder einer Fuge.

Besonders bevorzugt sieht die vorliegende Erfindung vor, dass es sich bei dem Gips-Formkörpern um eine Gipskartonplatte, umfassend das erfindungsgemäße Dispergiermittel, handelt. Weiterhin wird ein Verfahren zur Herstellung von Gipskartonplatten umfasst, in welchem ein erfindungsgemäßes Dispergiermittel eingesetzt wird. Von maßgeblicher Bedeutung bei der Herstellung von Gipsbauplatten, insbesondere Gipskartonplatten ist die Geschwindigkeit des Abbindevorgangs. Weltweit werden derzeit jährlich über 8.000 Mio. m² Gipskartonplatten hergestellt. Die Herstellung von Gipskartonplatten ist lange bekannt. Sie ist beispielsweise beschrieben in dem US Patent 4,009,062. Der eingesetzte abbindefähige Gipsbrei aus Calciumsulfat-Halbhydrat und Wasser wird typischerweise in einem Durchlaufmischer mit hoher Drehzahl erzeugt, auf eine Kartonbahn kontinuierlich aufgetragen und mit einem zweiten Karton abgedeckt. Die beiden Kartonbahnen werden als Sicht- bzw. Rückseitenkarton bezeichnet. Der Plattenstrang bewegt sich dann auf einem sogenannten Abbindeband, wobei am Ende des Abbindebandes eine fast vollständige Umwandlung der abbindefähigen Calciumsulfat-Phasen in Calciumsulfat-Dihydrat stattgefunden haben muss. Nach dieser Aushärtung wird die Bahn in Platten vereinzelt und das noch in den Platten vorhandene Wasser wird in beheizten Mehretagentrocknern entfernt.

Derartige Gipskartonplatten werden im Innenausbau für Decken und Wände im großen Umfang verwendet.

Um der steigenden Nachfrage gerecht zu werden sowie zur Minimierung der Produktionskosten, werden ständig Anstrengungen unternommen, den Herstellungsprozess zu verbessern. Moderne Anlagen zur Fabrikation von Gipsbauplatten können Fertigungsgeschwindigkeiten von bis zu 180 Meter pro Minute erreichen. Die größtmögliche Auslastung der Anlagenkapazität ist nur durch den Einsatz von hochwirksamen Beschleunigern möglich. Die Abbindezeit des Calciumsulfat-Halbhydrats bestimmt hierbei die Dauer, bis die Gipskartonplatten geschnitten werden kann und damit die Länge bzw. die Geschwindigkeit des Förderbandes und somit die Produktionsgeschwindigkeit. Darüber hinaus muss die Hydratation abgeschlossen sein, bevor die Platten im Trockner hohen Temperaturen ausgesetzt werden. Ansonsten wird das Festigkeitspotential des Bindemittels unzureichend genutzt und die Gefahr der Volumenexpansion durch

Nachhydratation bei Feuchtezutritt geschaffen.

Es besteht daher erhebliches ökonomisches Interesse, die Verzögerung beim Abbindevorgang durch die Verwendung von Dispergiermittel zu minimieren. Die vorliegende Erfindung umfasst deshalb auch ein Verfahren zur Herstellung einer Gipskartonplatte, in welchem das erfindungsgemäße Dispergiermittel eingesetzt wird. Der Einsatz des erfindungsgemäßen Bindemittels kann hier in der gleichen Art und Weise wie bei den bisher bekannten Dispergiermitteln erfolgen, so dass keine weiteren Umstellungen des Herstellprozesses notwendig sind.

In einer weiterhin bevorzugten Ausführungsform kann es sich bei dem erfindungsgemäßen Gips-Formkörper um einen calciumsulfathaltigen Fließestrich handeln. Weiterhin wird ein Verfahren zur Herstellung von calciumsulfathaltigen Fließestrich umfasst, in welchem ein erfindungsgemäßes Dispergiermittel eingesetzt wird.

Die nachfolgenden Beispiele verdeutlichen die Vorteile der vorliegenden Erfindung.

### Beispiele

### Gelpermeationschromatographie (GPC)

Die Probenpräparation für die Molgewichtsbestimmung erfolgte durch Lösen von Copolymerlösung im GPC Eluent, so dass die Polymerkonzentration im GPC-Eluent 0,5 Gew.-% beträgt. Danach wurde diese Lösung über einen Spritzenvorsatzfilter mit Polyethersulfonmembran und Porengröße 0,45 µm filtriert. Das Injektionsvolumen dieses Filtrats betrug 50 - 100 µl.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).
- Säulen:: Shodex SB-G Guard Column for SB-800 HQ series Shodex OHpak SB 804HQ and 802.5HQ (PHM gel, 8 x 300 mm, pH 4,0 bis 7,5)
- Eluent:: 0,05 M wässrige Ammoniumformiat / Methanol-Mischung = 80:20 (Volumenteile)
- Flußrate:: 0,5 ml/min
- Temperatur:: 50° C
- Injektion:: 50 bis 100 µl
- Detektion:: RI und UV

Die Molekulargewichte der Copolymere wurden relativ zu Polyethylenglykolstandards der Firma PSS Polymer Standards Service GmbH bestimmt. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

### Synthese von 2-Hydroxyethylacrylatphosphat (HEA-P) und 2-Hydroxyethylacrylamidphosphat (HEAA-P)

In einem Glasreaktor werden 116 g 2-Hydroxyethylacrylat vorgelegt und 80 g Polyphosphorsäure zugegeben und bei 40°C zur Reaktion gebracht. Nach 2 h Reaktionszeit unter Rühren wird die Mischung für weitere 24 Stunden bei Raumtemperatur stehengelassen. Bei der Phosphorylierung von 2-Hydroxyethylacrylamid wird analog verfahren und die Einsatzstoffe in den gleichen Molverhältnissen zur Reaktion gebracht.

### Synthese der erfindungsgemäßen Dispergiermittel

### Beispiel 1

In einem Glasreaktor, ausgestattet mit Rührer, pH-Elektrode, Thermometer, Redoxelektrode, N₂-Zugang, werden 108,7 g deionisiertes Wasser und 112,5 g Vinyloxybutylpolyethylenglykol-5800 (VOBPEG 5800) vorgelegt und auf eine Polymerisationsstarttemperatur von 15°C gekühlt (Vorlage).

In einem separaten Zulaufgefäß werden 22,12 g 2-Hydroxyethylacrylatphosphat (HEA-P) mit 199,08 g deionisiertem Wasser und 9,7 g 50%iger NaOH homogen vermischt (Lösung A). Parallel wird eine 6 %-ige Lösung einer Mischung aus Natriumsulfit, dem Dinatriumsalz der 2-Hydroxy-2-sulfinatoessigsäure und dem Dinatriumsalz der 2-Hydroxy-2-sulfonatoessigsäure (Brüggolit FF6 der Brüggemann GmbH), in Wasser hergestellt (Lösung B). Unter Rühren und Kühlen werden zunächst 109,53 g der Lösung A zur Vorlage gegeben und danach 0,77 g 3-Mercaptopropionsäure (MPS) zur restlichen Lösung A gegeben. Anschließend werden nacheinander 0,14 g 3-Mercaptopropionsäure und 0,089 g Eisen-II-sulfat-Heptahydrat (FeSO₄) in die Vorlagelösung gegeben. Diese wird anschließend mit NaOH (50%ig) auf einen Start-pH von 5,3 eingestellt.

Mit der Zugabe von 0,75 g Wasserstoffperoxid (30%ige Lösung in Wasser) zum Vorlagegemisch wird die Reaktion gestartet. Zeitgleich wird mit der Zugabe von Lösung A und Lösung B zur gerührten Vorlage begonnen. Lösung A wird über 30 min zugegeben. Lösung B wird parallel mit einer konstanten Dosiergeschwindigkeit von 13,5 ml/h solange zugegeben, bis kein Peroxid mehr in der Lösung nachgewiesen werden kann. Anschließend wird die erhaltene Polymerlösung mit 50%iger Natriumhydroxidlösung auf einen pH-Wert von 6,5 eingestellt.

Das erhaltene Copolymer fällt in einer Lösung an, die einen Feststoffgehalt von 29,3 Gew.-% aufweist. Das Gewichtsmittel der Molmasse des Copolymers beträgt 40.400 g/Mol, die Polydispersität 1,6.

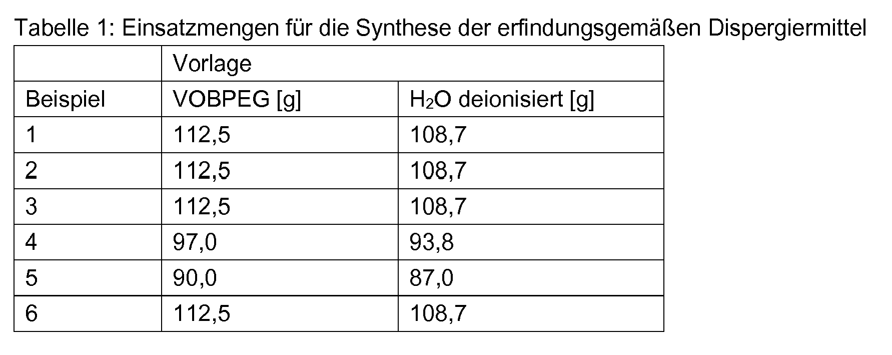

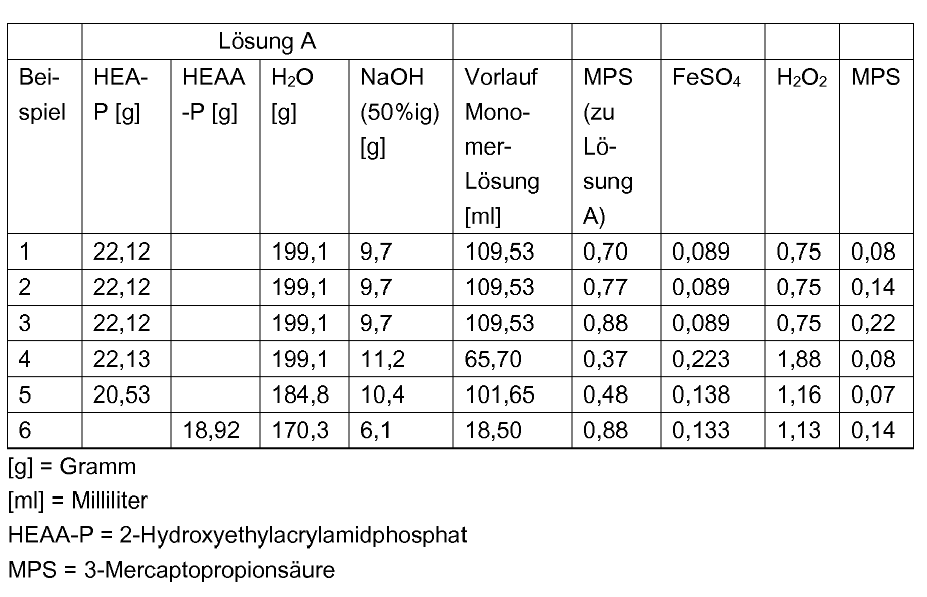

**Tabelle 2: Übersicht der analytischen Daten**

| Beispiel | Mw g/mol | PD |
|---|---|---|
| 1 | 40.400 | 1,6 |
| 2 | 26.900 | 1,3 |
| 3 | 26.300 | 1,2 |
| 4 | 22300 | 1,4 |
| 5 | 25600 | 1,4 |
| 6 | 32800 | 1,3 |

### Beispiel 7

Die Versuchsapparatur besteht aus 500 ml Doppelwandreaktor, Thermostat, Rührmotor mit Flügelrührer, Temperatur und pH-Sonde und drei Zuläufen.

In den Reaktor werden 60 g Wasser und 73,72 g 3-Methylbut-3-en-1-ol-Polyethylenglykol 2200 gegeben. Unter Rühren wird der Reaktorinhalt auf 55°C aufgeheizt und die Temperatur gehalten.

Anschließend wird Zulauf A, bestehend aus 100 g Wasser, 39,82 g 2-Hydroxyethylacrylatphosphat (HEA-P) und 0,30 g 2-Mercaptoethanol, in 2 Stunden und Zulauf B, bestehend aus 23 g Wasser und 2 g Wako VA-044 (2,2'-Azobis[2-(2-imidazolin-2-yl)propane]dihydrochloride), in 2 Stunden und 30 Minuten dosiert. Während des Dosiervorgangs von Zulauf A und B wird mit Zulauf C, bestehend aus 9,8 g Natriumhydroxyd und 39,2 g Wasser, der pH-Wert des Reaktorinhalts eingestellt. Dabei wird die Dosiergeschwindigkeit von Zulauf C so gewählt, dass der pH-Wert des Reaktorinhalts bei pH 4,5 ist.

Nach Dosierende wird der Reaktorinhalt weitere 30 Minuten bei 55°C gerührt. Danach wird der Reaktorinhalt auf 25°C abgekühlt und auf pH 6 neutralisiert.

Das entstandene farblose leicht trübe Produkt hat einen Feststoffgehalt von 36%. Die mittlere Molmasse des Polymers beträgt 29.000 g/mol.

### Beispiel 8

Die Versuchsapparatur besteht aus 500 ml Doppelwandreaktor, Thermostat, Rührmotor mit Flügelrührer, Temperatur und pH-Sonde und drei Zuläufen.

In den Reaktor werden 55 g Wasser und 57 g Methallyl-Polyethylenglykol 2200 gegeben. Unter Rühren wird der Reaktorinhalt auf 60°C geheizt und bei dieser Temperatur gehalten. Nach Erreichen der Temperatur wird Zulauf A, bestehend aus 60 g Wasser, 30,79 g 2-Hydroxyethylacrylatphosphat (HEA-P) und 0,30 g 3-Mercaptopropionsäure, in 2 Stunden und Zulauf B, bestehend aus 8,4 g Wasser und 1,6 g Wako VA-044 (2,2'-Azobis[2-(2-imidazolin-2-yl)propane]dihydrochloride), in 2 Stunden dosiert. Während des Dosiervorgangs von Zulauf A und B wird mit Zulauf C, bestehend aus 5,2 g Natriumhydroxyd und 20,8 g Wasser, der pH-Wert des Reaktorinhalts eingestellt. Dabei wird die Dosiergeschwindigkeit von Zulauf C so gewählt, dass der pH-Wert des Reaktorinhalts bei pH 2,5 ist.

Nach Dosierende wird der Reaktorinhalt weitere 60 Minuten bei 60°C gerührt. Danach wird der Reaktorinhalt auf 25°C abgekühlt und auf pH 6 neutralisiert.

Das entstandene farblose leicht trübe Produkt hat einen Feststoffgehalt von 39%. Die mittlere Molmasse des Polymers beträgt 28.800 g/mol.

### Beispiel 9

Die Versuchsapparatur besteht aus 500 ml Doppelwandreaktor, Thermostat, Rührmotor mit Flügelrührer, Temperatur und pH-Sonde und drei Zuläufen.

In den Reaktor werden 60 g Wasser und 81,78 g 3-Methylbut-3-en-1-ol-Polyethylenglykol 2200 gegeben. Unter Rühren wird der Reaktorinhalt auf 55°C geheizt und bei dieser Temperatur gehalten.

Nach Erreichen der Temperatur wird Zulauf A, bestehend aus 100 g Wasser, 27,61 g 2-Hydroxyethylacrylatphosphat (HEA-P) und 0,30 g 2-Mercaptoethanol, in 2 Stunden und Zulauf B, bestehend aus 23 g Wasser und 2 g Wako VA-044 (2,2'-Azobis[2-(2-imidazolin-2-yl)propane]dihydrochloride), in 2 Stunden dosiert.

Nach Dosierende wird der Reaktorinhalt weitere 60 Minuten bei 55°C gerührt. Danach wird der Reaktorinhalt auf 25°C abgekühlt und auf pH 6 neutralisiert.

Das entstandene farblose leicht trübe Produkt hat einen Feststoffgehalt von 35%. Die mittlere Molmasse des Polymers beträgt 24.000 g/mol.

### Dispergiermittel nach dem Stand der Technik

### Beispiel 10

Das Dispergiermittel nach dem Stand der Technik auf Basis von 2-Hydroxyethylmethacrylatphosphat wird in Analogie zur JP-2000-327386 (Taiheiyo Cement Corp) hergestellt.

94 g Methoxypolyethyleneglykol-methacrylat (MPEGMA mit 23 EO Einheiten) werden vorlegt. Dazu werden 8.8 g Natriummethallylsulfonat und 180 g Wasser hinzugefügt. 24 g 2-Hydroxyethylmethacrylatphosphat (HEMA-P) werden zur Vorlage zugegeben. Anschließend wird die erhaltene Lösung mit 30%iger Natriumhydroxidlösung auf einen pH-Wert von 8,5 eingestellt. Nachdem das Reaktionsgefäß mit Schutzgas gespült ist, werden 9 g Ammoniumpersulfat langsam unter Rühren hinzugefügt. Die Reaktionsmischung wird daraufhin bei 60°C für vier Stunden gerührt. Das entstandene farblose, leicht trübe Produkt hat einen Feststoffgehalt von 41,4%. Die mittlere Molmasse beträgt 32.300 g/mol.

### Anwendungsbeispiele:

Die Dispergiermittel aus den Synthesebeispielen werden auf ihre Eigenschaften als Gipsverflüssiger in einem geeigneten Testsystem untersucht.

Es werden zunächst 300 g β-Halbhydrat mit fein gemahlenem Calciumsulfat Dihydrat (Gips) als Beschleuniger vorhomogenisiert und in 188 g Wasser eingestreut. Das Dispergiermittel wird zuvor in das Anmachwasser eingemischt. Anschließend wird der Ansatz für 15 Sekunden stehengelassen. Danach wird das Rühren mit dem Hobart-Mischer für weitere 15 Sekunden bei Stufe II (285 Umdrehungen pro Minute) gestartet. Nach dem Befüllen eines Zylinders (h = 10 cm, d = 5 cm), der nach 60 Sekunden angehoben wird, erfolgt die Bestimmung des Fließmaßes. Die Erstarrungszeit wird mit der sogenannten Messerschnitt-Methode (nach DIN EN 13279-2) bestimmt.

**Tabelle 3: Anwendungsbeispiele bei einem Wasser zu Gips Verhältnis von 0.63**

| Dispergiermittel | FM % | CSA [g] | Fließmaß [cm] | Messerschnitt [min:sec] |
|---|---|---|---|---|
| Beispiel 10 | 0,130 | 0,05 | 19,3 | 2 : 30 |
| Beispiel 1 | 0,055 | 0,030 | 19,4 | 2 : 15 |
| Beispiel 2 | 0,060 | 0,030 | 19,4 | 2 : 10 |
| Beispiel 3 | 0,060 | 0,030 | 19,0 | 2 : 15 |
| Beispiel 4 | 0,058 | 0,035 | 19,1 | 2 : 15 |
| Beispiel 5 | 0,048 | 0,035 | 19,4 | 2 : 15 |
| Beispiel 6 | 0,100 | 0,040 | 20,1 | 2 : 20 |
| Beispiel 7 | 0,045 | 0,035 | 19,4 | 2 : 20 |
| Beispiel 8 | 0,055 | 0,040 | 19,3 | 2 : 15 |

| | | | | |
|---|---|---|---|---|
| FM % = Eingesetzte Menge an Dispergiermittel (Feststoff) bezogen auf die Menge an β-Halbhydrat in Massenprozent CSA = Eingesetzte Menge an Calciumsulfat Dihydrat (Gips) als Beschleuniger | | | | |

Die erfindungsgemäßen Dispergiermittel zeigen eine sehr gute Verflüssigungswirkung, erkennbar an der geringen Dosierung an Dispergiermittel um das gleiche Fließmaß im Vergleich zu einem Polyphosphatether auf Methacryaltbasis nach dem Stand der Technik (Beispiel 10) zu erreichen.

## Patentansprüche

1. Dispergiermittel, umfassend ein Polymer, erhältlich durch Copolymerisation von Monomeren, umfassend
5 bis 80 Mol-% mindestens eines Monomers 1, dargestellt durch die folgende Formel (1),
0 bis 20 Mol-% mindestens eines Monomers 2, dargestellt durch die folgende Formel (2) und
1 bis 80 Mol-% mindestens eines Monomers 3, dargestellt durch die folgende Formel (3): 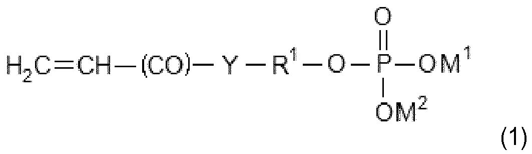 worin
R¹ für eine Alkylengruppe mit 2 bis 8 Kohlenstoffatomen steht,
Y für O oder NR²,
R² für einen Rest aus der Gruppe Wasserstoff, eine Alkylgruppe mit 1 bis 8 Kohlenstoffatomen und Formel (A), wobei R¹, M¹ und M² die für Formel (1) genannten Bedeutungen besitzen, 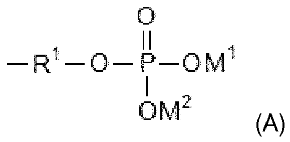
M¹ und M² jeweils unabhängig voneinander für Wasserstoff, eine AmmoniumVerbindung und ein di- oder trivalentes Metall; 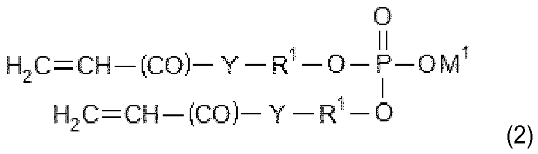 worin R¹, Y und M¹ die für Formel (1) genannten Bedeutungen besitzen,
R³-O-(CₙH₂ₙO)ₘ-Z (3)
worin
R³ für Wasserstoff, einen aliphatischen Kohlenwasserstoffrest mit 1 bis 16 C-Atomen, ein cycloaliphatischer Rest mit 5 bis 12 C-Atomen oder ein Arylrest mit 6 bis 14 C-Atomen, wobei der Arylrest weitere Substituenten aufweisen kann,
n gleich oder verschieden und jeweils für eine ganze Zahl von 2 bis 4,
m für eine ganze Zahl zwischen 20 und 160
Z für mindestens einen Rest 4, 5, 6 und 7, dargestellt durch die folgenden Formeln (4), (5), (6) und (7): 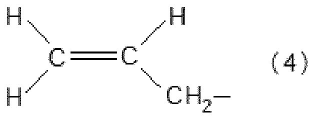 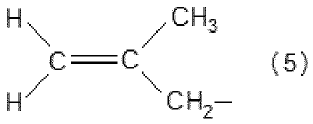 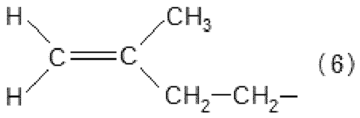 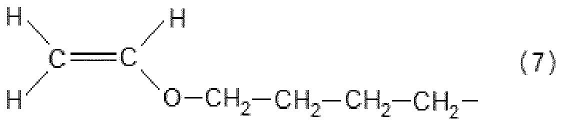
steht.

2. Dispergiermittel nach Anspruch 1, **dadurch gekennzeichnet, dass** das Polymer aus Monomer 1, ggf. Monomer 2 und Monomer 3 besteht.

3. Dispergiermittel nach Anspruch 1 oder 2, **dadurch gekennzeichnet, dass** es sich bei der Gruppe R¹ sowohl in Monomer 1 als auch in Monomer 2 um eine Ethylen-Gruppe handelt.

4. Dispergiermittel nach einem der Ansprüche 1 bis 3, **dadurch gekennzeichnet, dass** das Polymer ein mittleres Molekulargewicht zwischen 15.000 und 60.000 g/mol aufweist, wobei das Molekulargewicht mit Gel-Permeations-Chromatographie gegen einen PEG-Standard gemessen wird.

5. Verfahren zur Herstellung eines Polymers, umfassend die Copolymerisation mindestens eines Monomers 1 gemäß Anspruch 1, dargestellt durch die Formel (1), ggf. mindestens eines Monomers 2 gemäß Anspruch 1, dargestellt durch die Formel (2) und mindestens eines Monomers 3 gemäß Anspruch 1, dargestellt durch die Formel (3), **dadurch gekennzeichnet, dass** die Polymerisation in wässriger Lösung durchgeführt wird.

6. Verfahren nach Anspruch 5, **dadurch gekennzeichnet, dass** die Temperatur der Reaktionslösung zwischen 5 und 100°C und der pH zwischen 0,5 und 8 eingestellt wird.

7. Verwendung eines Dispergiermittels nach einem der Ansprüche 1 bis 4 in Calciumsulfat basierenden Bindemittelsystemen.

8. Verfahren zur Herstellung eines Gips-Formkörpers, wobei ein Dispergiermittel nach einem der Ansprüche 1 bis 4 eingesetzt wird.

9. Verfahren nach Anspruch 8, **dadurch gekennzeichnet, dass** es sich bei dem Gips-Formkörper um eine Gipskartonplatte handelt.

10. Verfahren nach Anspruch 8, **dadurch gekennzeichnet, dass** es sich bei dem Gips-Formkörper um einen calciumsulfathaltigen Fließestrich handelt.

11. Gips-Formkörper umfassend ein Dispergiermittel nach einem der Ansprüche 1 bis 4.

12. Gips-Formkörpers nach Anspruch 11, **dadurch gekennzeichnet, dass** es sich um eine Gipskartonplatte handelt.

13. Gips-Formkörpers nach Anspruch 11, **dadurch gekennzeichnet, dass** es sich um einen calciumsulfathaltigen Fließestrich handelt.
